(19)

Europäisches
Patentamt

European
Patent Office

Office européen
des brevets

(11) **EP 3 113 428 A1**

(12) **EUROPEAN PATENT APPLICATION**

(43) Date of publication:
**04.01.2017 Bulletin 2017/01**

(51) Int Cl.:
*H04L 12/851* (2013.01)   *H04L 12/801* (2013.01)

(21) Application number: **15290168.2**

(22) Date of filing: **30.06.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **ALCATEL LUCENT
92100 Boulogne-Billancourt (FR)**

(72) Inventor: **DE Vleeschauwer, Danny
2018 Antwerpen (BE)**

(74) Representative: **Plas, Axel Ivo Michel
IP HILLS NV
Hubert Frère-Orbanlaan 329
9000 Gent (BE)**

(54) **A NETWORK NODE FOR CHECKING COMPLIANCE OF A PLURALITY OF MACRO-FLOWS**

(57)    A network node (1) able to check compliance of macro-flows (100), said network node (1) comprising:
- an output interface (10), adapted to:
- count an amount of packets (110) of a macro-flow (100) handled by said network node (1);
- count an amount of congestion-aware packets (120) of said macro-flow (100) handled by said network node (1);

- a congestion response measuring engine (20), adapted to measure from said amount of packets (110) and said amount of congestion-aware packets (120) a response (2) of said macro-flow (100) to congestion as indicated by said congestion-aware packets (120); and
- a compliance discriminating unit (30), configured to:
- compare said response (2) with a compliance threshold (3); and
- identify said macro-flow (100) as non-compliant when said response (2) is lower than said compliance threshold (3).

Fig. 1

**Description**

**Technical Field**

The present invention relates to the field of detection and evaluation of the reaction of sources to a state of congestion of a network node in a telecommunication network.

**Background**

In data networking and queueing theory, network congestion occurs when a link or node is carrying so much data that its quality of service deteriorates. A network node may convey congestion messages indicative for the fact that the queue on its output interface gets overloaded in three different ways. Typically congestion is signalled by delaying packets in the queue of the network node, by dropping packets or by marking packets. For example, a network node may delay packets, which automatically happens when queues at the output interface of the network node fill up. Alternatively, a network node may for example mark packets, via schemes such as the Early Congestion Notification scheme, also referred to as ECN, in combination with the Adaptive Queue Management scheme, also referred to as AQM. Alternatively, a network node may for example drop packets, either through tail drop or via an AQM scheme. Modern networks use congestion control techniques to try to avoid congestion collapse, for example when conveying messages to the sources related to their state of congestion.

Many sources react to congestion messages by adapting their rate. For example, Transport Control Protocol Reno sources, also referred to as TCP Reno sources, and CUBIC Transport Control Protocol sources, also referred to as CUBIC TCP sources, react to packet loss. Not all sources react in the same way, for example TCP CUBIC sources react in a different way to dropped packets than TCP Reno sources do. Alternatively, Transport Control Protocol Vegas sources, also referred to as TCP Vegas sources, react to delayed packets. Some sources do not react at all to congestion messages, for example User Datagram Protocol sources, also referred to as UDP sources. Other examples of protocols. e.g., Datagram Congestion Control Protocol, also referred to as DCCP, that react to congestion messages exist. In other examples a congestion control mechanism is implemented on the application layer. For instance, adaptive sources that run over UDP can make use of the Real-time Transport Control Protocol, also referred to as RTCP, to convey congestion and adapt the sending rate. Another example is Dynamic Adaptive Streaming over HTTP (over TCP), also referred to as DASH, where the choice of the best video rate comprises an additional congestion control loop to complement the congestion control algorithm of TCP. The examples cited above illustrate the diversity of the reactions of sources to congestion messages conveyed by a network node.

The scientific publication entitled "Performance Evaluation of TCP in the Presence of UDP in Heterogeneous Networks by using Network Simulator 2", published on June 1st 2014 by Devangbhai Govindbhai Chavda et al. in the International Journal for Scientific Research and Development, Vol. 2, No. 3, assesses how various types of TCP sources react to the present of UDP sources. The scientific publication entitled "A Cognitive Accountability Mechanism for Penalising Misbehaving ECN-based TCP stacks", published on April 1st 2012 by Steven Latré et al. in the International Journal of Network Management, Vol. 23, Issue 1, pages 16-40, describes a machine learning approach to detect individual flows that are not reacting to ECN marks. Both these papers assume a holistic view: a network node assesses the behaviour of a source from all the available information of the network, for example from the amount of traffic the flows bring everywhere in the network. This is a computing power consuming way of determining the reaction of a source to congestion messages, which additionally leaves network nodes conveying the congestion messages oblivious of which sources react to congestion messages and which do not react to congestion messages.

**Summary of the Invention**

It is an objective to disclose a device and the related method that overcome the above identified shortcomings of existing solutions. More particularly, it is an objective to disclose such a network node and the related method for checking in a computing power efficient manner which flows react to congestion messages and in which way the flows react to the congestion messages, thereby improving the experience of destination endpoints of the telecommunication network.

According to a first aspect of the invention, the above defined objectives are realized by a network node able to check compliance of macro-flows, the network node comprising:

- an output interface, adapted to:

  - count an amount of packets of a macro-flow handled by the network node;
  - count an amount of congestion-aware packets of said macro-flow handled by the network node;

- a congestion response measuring engine, adapted to measure from the amount of packets and the amount of congestion-aware packets a response of the macro-flow to congestion as indicated by the congestion-aware packets; and
- a compliance discriminating unit, configured to:

  - compare the response with a compliance threshold; and
  - identify the macro-flow as non-compliant when the response is lower than the compliance threshold.

In accordance with the present invention, a micro-flow comprises packets having the same specific characteristics, called keys. A group of commonly used keys are Protocol, SrcIP, SrcPort, DestIP, DestPort. Protocol is the protocol used by the upper layer, SrcIP and SrcPort are the source IP address and the source port number separately. DestIP and SrcIP are the destination IP address and the destination port number separately. A macro-flow is pooled by micro-flows. In other words, according to the present invention, a macro-flow comprises one or more individual micro-flows.

A network node according to the present invention is a part of a telecommunication network, and is adapted to ensure the transport of packets from senders of the telecommunication network, e.g. sources, to destination endpoints of the telecommunication network. The output interface of the network node measures a number of packets of a macro-flow that are handled by the network node, as well as a number of congestion-aware packets of the macro-flow that are handled by the network node. The congestion response measuring engine of the network node determines, only from the number of packets and the number of congestion-aware packets of the macro-flow that are handled by the network node, if the macro-flow reacts to congestion. In other words, the network node does not assess the response of the macro-flow to congestion from all the available information about the telecommunication network. From this response, the compliance discriminating unit of the network node is able to identify if the macro-flow does not comply with the congestion messages of the network node when the response of the macro-flow is lower than a compliance threshold. The network node only has a partial and local view of the telecommunication network from which the network node only knows which actions the network node takes. The local view of the network node further allows the network node to only observe packets passing through the network node, thereby checking the amount of traffic the macro-flow brings at the point of the network node, without requiring the collection of all the available information about the telecommunication network. The network node is therefore oblivious of other network nodes of the telecommunication network, and of sources and destination endpoints of the telecommunication network. The network node therefore determines if and how a macro-flow reacts to congestion, in a computing power efficient and fast manner. The network node may then take actions against macro-flows that are identified as non-compliant. This improves the experience of destination endpoints of the telecommunication network.

According to an optional embodiment, the compliance discriminating unit is further adapted to:

- cluster responses of a plurality of macro-flows to congestion, thereby generating a cluster of responses;
- determine the compliance threshold from the cluster of responses.

For each of the macro-flows of the plurality of macro-flows, the output interface of the network is adapted to count an amount of packets of each macro-flow handled by the network node, as well as to count an amount of congestion-aware packets of each of the macro-flows handled by the network node. The congestion response measuring engine is adapted to measure a response of each macro-flow to congestion from each respective amount of packets and each respective amount of congestion-aware packets. The compliance discriminating unit of the network node is further adapted to cluster responses for the plurality of macro-flows, thereby generating a cluster of responses. The compliance threshold for identifying one or more macro-flows of the plurality of macro-flows is then determined by the compliance discriminating unit from the cluster of responses. This way, the determination of compliance threshold relies on the collection of a larger sample of information in the local view of the network node, and the compliance threshold is therefore determined more accurately. As a consequence, the network node checks more accurately and more reliably which macro-flows are less compliant than others. The compliance discriminating unit determines the compliance threshold for the cluster of responses. In other words, each response of the macro-flows of the cluster of responses is compared with the compliance threshold and macro-flows for which the response out of the cluster of responses is lower than the compliance threshold are identified as non-compliant.

According to an optional embodiment, the network node further comprises:

- a predetermined response template database, adapted to store predetermined response templates of the macro-flow to congestion;

and wherein the congestion response measuring engine is operationally coupled to the predetermined response template database and is further adapted to:

- select from said amount of packets and the amount of congestion-aware packets one of the predetermined response templates for the macro-flow; and
- apply one of the predetermined response templates.

Based on the amount of packets of a macro-flow handled by the network node and on the amount of congestion-aware packets of the macro-flow handled by the network node, the congestion response measuring engine of the network node is further adapted to select a predetermined response template for a macro-flow from a predetermined response template. The predetermined response template comprises compliance parameters and the congestion response measuring unit is adapted to determine the compliance parameters of the macro-flow. To each macro-flow of a plurality of macro-flows is one predetermined response template selected and the compliance parameters of the predetermined response template are determined by the congestion response measuring engine for each macro-flow, thereby applying one of the predetermined response templates to each macro-flow. The compliance parameters of each macro-flow supported by the network node are then clustered, thereby generating a cluster of responses, and the compliance threshold is determined from the cluster of responses. Macro-flows for which the response is lower than the compliance threshold are identified as non-compliant.

According to an optional embodiment, the congestion-aware packets correspond to:

- delayed packets;
- early congestion notification packets; or
- dropped packets.

A network node using all three types of congestion signals works as follows. When a queue of packets of a macro-flow fills up at the output interface of the network node, packets of the macro-flow are first delayed and the network node counts congestion-aware packets corresponding to delayed packets of the macro-flow. When the queue of packets of a macro-flow builds up at the output interface of the network node, the ECN marks packets according to an AQM scheme and the network node counts congestion-aware packets corresponding to ECN marked packets. When the queue of packets of a macro-flow overflows at the output interface of the network node, the network node counts congestion-aware packets corresponding to dropped packets. A combination of one or more of these three congestion signals is used to assess whether or not the macro-flow reacts to congestion signals.

According to an optional embodiment, the output interface is further adapted to:

- count a subset amount of packets of a macro-flow handled by the network node; and
- count a congestion-aware subset amount of congestion-aware packets of the macro-flow handled by the network node.

Instead of counting all the packets of a macro-flow handled by the network node and all the congestion-aware packets of the macro-flow handled by the network node, the output interface may only count a subset amount of packets of the macro-flow handled by the network node and only count a congestion-aware subset amount of congestion-aware packets of the macro-flow handled by the network node. The subset amount of packets of a macro-flow and the congestion-aware subset amount of congestion-aware packets of the macro-flow are chosen in a statistical representative way, i.e. that the characteristics of the subsets reflect the characteristics of the whole sets. Counting a subset amount of packets of a macro-flow and a congestion-aware subset amount of congestion-aware packets of the macro-flow prevents the network node from having to inspect every single packet of the macro-flow. Instead, the network node could inspect, e.g. every 10th packet of the macro-flow and every 10th congestion-aware packet of the macro-flow, which considerably lowers the processing power needed to acquire the amount of packets and of the amount of congestion-aware packets and therefore reduces the costs associated with running the compliance check. Additionally, the congestion response measuring engine faster measures a response of the macro-flow to congestion from the subset amount of packets and the congestion-aware subset amount of congestion-aware packets. The compliance discriminating unit therefore identifies the macro-flow as a non-compliant faster, i.e. sooner for the network node, which may then sooner take actions against the macro-flows that is identified as non-compliant. This improves the experience of the destination endpoints of the telecommunication network.

According to an optional embodiment, the macro-flows comprise a plurality of micro-flows with same source and destination addresses and/or a plurality of micro-flows with same source and destination port numbers.

The output interface of the network node is further adapted to discriminate micro-flows from which source the micro-flows stem. The micro-flows may be subdivided based on the IP addresses of their senders, e.g. their sources, and the IP addresses of their destination endpoints. Alternatively, the micro-flows may be subdivided based on the port numbers of their senders, e.g. their sources, and the port numbers of their destination endpoints.

According to a second aspect of the invention, there is provided a method for checking compliance of macro-flows, the method comprising the steps of:

- counting an amount of packets of a macro-flow handled by a network node;
- counting an amount of congestion-aware packets of the macro-flow handled by the network node;
- measuring from the amount of packets and the amount of congestion-aware packets a response of the macro-flow to congestion as indicated by the congestion-aware packets;
- comparing the response with a compliance threshold;
- identifying the macro-flow as non-compliant when the response is lower than the compliance threshold.

A network node according to the present invention is a part of a telecommunication network, and is adapted to ensure the transport of packets from senders of the telecommunication network, e.g. sources, to destination endpoints of the telecommunication network. A number of packets of a macro-flow that are handled by the network node is measured, as well as a number of congestion-aware packets of the macro-flow that are handled by the network node. A response of the macro-flow to congestion as indicated by the congestion-aware packets is determined only from the number of packets and the number of congestion-aware packets of the macro-flow that are handled by the network node. In other words, the network node does not assess the response of the macro-flow to congestion from all the available information about the telecommunication network. From this response, the macro-flow is identified as non-compliant when the response of the macro-flow to congestion is lower than a compliance threshold. The network node only has a partial and local view of the telecommunication network from which the network node only knows which actions the network node takes. The local view of the network node further allows the network node to only observe packets passing through the network node, thereby checking the amount of traffic the macro-flow brings at the point of the network node, without requiring the collection of all the available information about the telecommunication network. The network node is therefore oblivious of other network nodes of the telecommunication network, and of sources and destination endpoints of the telecommunication network. The network node therefore determines if and how a macro-flow reacts to congestion, in a computing power efficient and fast manner. The network node may then take actions against macro-flows that are identified as non-compliant. This improves the experience of destination endpoints of the telecommunication network.

The current invention in addition also relates to a computer program comprising software code adapted to perform the method according to the present invention.

The invention further relates to a computer readable storage medium comprising the computer program according to the present invention.

## Brief Description of the Drawings

Fig. 1 schematically illustrates an embodiment of a network node according to the present invention.

Fig. 2 schematically illustrates an embodiment of the steps of the method according to which a network node checks compliance of macro-flows.

Fig. 3 schematically illustrates an embodiment of the steps of the method according to which responses to congestion of a plurality of macro-flows are clustered.

Fig. 4 schematically illustrates an embodiment of a predetermined response template.

Fig. 5 schematically illustrates a suitable computing system for hosting the network node of Fig. 1.

## Detailed Description of Embodiment(s)

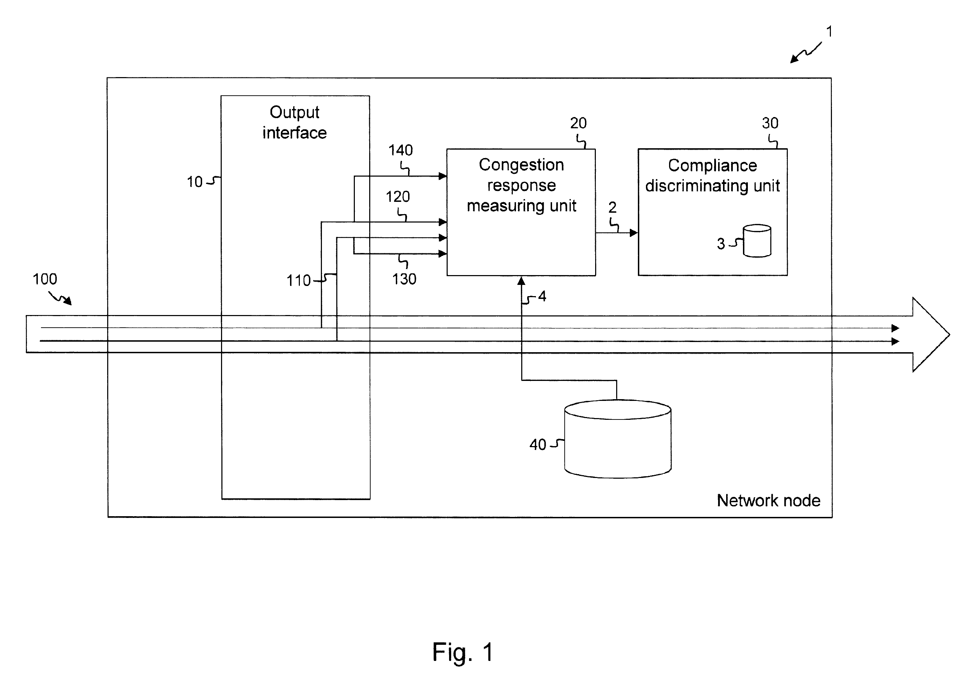

According to an embodiment shown in Fig. 1, a network node 1 comprises an output interface 10, a congestion response measuring engine 20 and a compliance discriminating unit 30. Optionally, the network node 1 comprises a predetermined response template database 40, comprising predetermined response templates 4 and operationally coupled to the congestion response measuring engine 20. The output interface 10 counts an amount of packets 110 of a macro-flow 100 handled by the network node 1. The output interface 10 further counts an amount of congestion-aware packets 120 of the macro-flow 100 handled by the network node 1. The congestion response measuring engine 20 receives the amount of packets 110 and the amount of congestion-aware packets 120. The congestion response measuring engine 20 measures from the amount of packets 110 and the amount of congestion-aware packets 120 a response 2 of the macro-flow 100 to congestion as indicated by the congestion-aware packets 120. The compliance discriminating unit 30 receives the response 2 of the macro-flow 100. The compliance discriminating unit 30 compares the response 2 with a compliance threshold 3, and identifies the macro-flow 100 as non-complaint when the response 2 is lower than the compliance threshold 3. Optionally, the congestion response measuring engine 20 selects from the amount of packets 110 and the amount of congestion-aware packets 120 one of the predetermined response templates 4 for the macro-flow 100 from the predetermined response template database 40. The congestion response measuring engine 20 then applies the selected predetermined response template 4 for the macro-flow 100. According to an alternative embodiment, the amount of packets 110 of the macro-flow 100 handled by the network node, as well as the amount of congestion-aware packets 120 of the macro-flow 100 handled by the network node, may be filtered, e.g. smoothened prior to being sent to the congestion response measuring engine 20. According to an alternative embodiment, the output interface 10 of the network node 1 counts a subset amount of packets 130 of a macro-flow 100 handled by the network node 1, and further counts a congestion-aware subset amount of congestion-aware packets 140 of the macro-flow 100 handled by the network node 1. According to an alternative embodiment, the compliance discriminating unit 30 clusters responses 2 of a plurality of macro-flows 100 to congestion, and thereby generates a cluster of responses 2. The compliance discriminating unit 30 then determines the compliance threshold 30 from the cluster of responses 2.

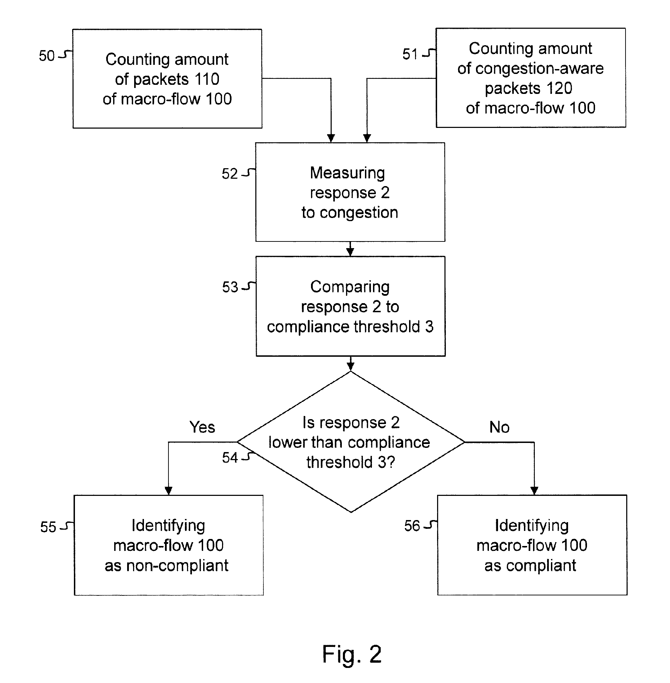

According to an embodiment show in Fig. 2, the steps of the method according to which a network node checks compliance of a macro-flow 100 are depicted. In step 50, an amount of packets 110 of the macro-flow 100 handled by the network node is counted. In step 51, an amount of congestion-aware packets 120 of the macro-flow 100 handled by the network node is counted. In step 52, a response 2 of the macro-flow 100 to congestion as indicated by the congestion-aware packets 120 is measured from the amount of packets 110 and the amount of congestion-aware packets 120. The response 2 is compared with a compliance threshold 3 in step 53. It is identified in step 54 if the response 2 is lower than the compliance threshold 3. If the response 2 is lower than the compliance threshold 3, the macro-flow 100 is identified as non-compliant in step 55. If the response 2 is larger than the compliance threshold 3, the macro-flow 100 is identified as compliant in step 56.

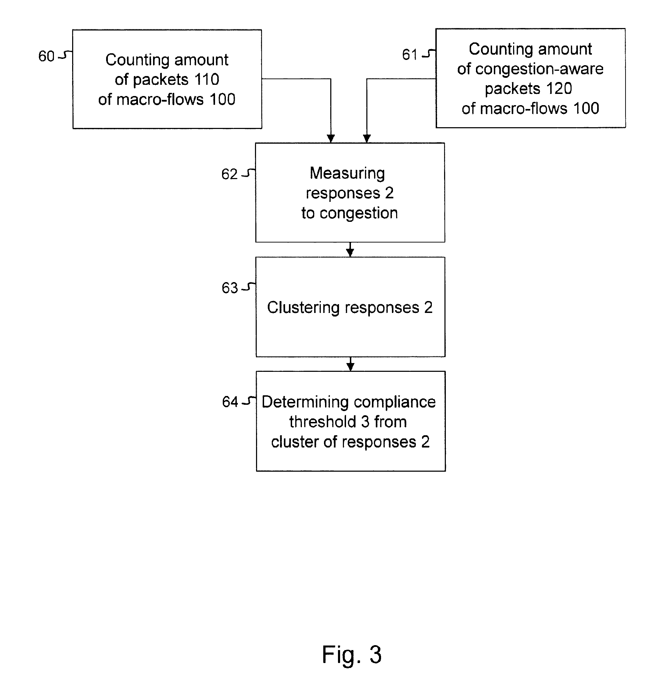

According to an embodiment show in Fig. 3, the steps of the method according to which a network node checks compliance of a plurality of macro-flows 100 are depicted. In step 60, an amount of packets 110 of each of the macro-flows 100 handled by the network node are counted. In step 61, an amount of congestion-aware packets 120 of each of the macro-flows 100 handled by the network node is counted. In step 62, responses 2 of each of the macro-flows 100 to congestion as indicated by the congestion-aware packets 120 are measured for the plurality of macro-flows 100 from each of the respective amount of packets 110 and each of the amount of congestion-aware packets 120. The responses 2 are clustered in step 63. In step 64, a compliance threshold 3 is determined from the cluster of responses 2 for the plurality of macro-flow 100.

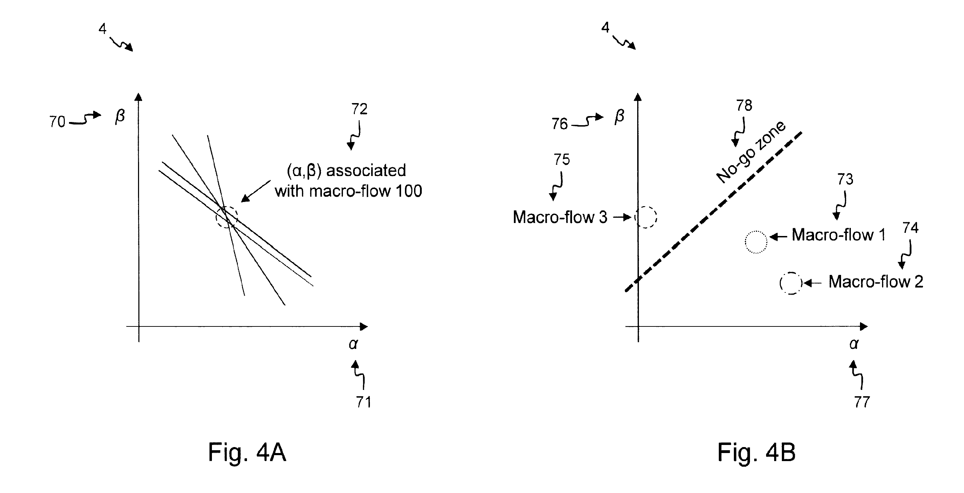

According to an embodiment shown in Fig. 4A-4B, an example of a predetermined response template 4 for the response of a macro-flow 100 is depicted. It is assumed that a macro-flow 100 adapts its throughput according to the fraction of dropped or marked packets the macro-flow 100 detects. The macro-flow 100 adapts its throughput according to the following relation (1):

$$throughput = \beta(dropping\ or\ marking\ ratio\ of\ packets)^{-\alpha} \qquad (1)$$

where $\alpha$ and $\beta$ are compliance parameters that depend on the traffic mix of the macro-flow 100. Relation (1) is derived from responses of individual flows to drops or marks of packets. For example, for an aggregate comprising persistent TCP Reno flows, $\alpha$=0.5 and $\beta \approx$(number of macro-flows)x(segment size)/(round trip time). For example, for an aggregate comprising persistent TCP CUBIC flows, $\alpha$=0.75 and $\beta \approx$(number of macro-flows)x(segment size)/(round trip time). For example, for an aggregate comprising Constant Bit Rate flows, $\alpha$=0 and $\beta \approx$(sum of the bit rate of individual macro-flows). These responses of individual flows serve as guidelines to set bounds on acceptable values for the parameters $\alpha$ and $\beta$. Since the throughput measured over some interval $\Delta t$ is $\Delta$(amount of packets 110)/$\Delta t$, and the dropping or marking ratio over the same interval is $\Delta$(amount of congestion-aware packets 120)/($\Delta$ amount of packets 110), the relation (1) can be rewritten as the relation (2):

$$(1 - \alpha) \log\left(\frac{\Delta(\text{amount of packets 110})}{\Delta t}\right)$$
$$= \log(\beta) \qquad (2)$$
$$- \alpha \log\left(\frac{\Delta(\text{amount of congestion aware packets 120})}{\Delta t}\right)$$

where the ratios $\frac{\Delta(\text{amount of packets }110)}{\Delta t}$ and $\frac{\Delta(\text{amount of congestion aware packets }120)}{\Delta t}$ are the rate of change, or derivatives, of respectively the amount of packets 110 and the amount of congestion-aware packets 120 of the macro-flow 100. In a log-log plot, relation (2) corresponds to a straight line.

An example of a method to determine the compliance parameters of a macro-flow 100 is as follows. At consecutive times $t_k$ the log rates of changes, i.e. the $\log\{\frac{\Delta(\text{amount of packets }110)}{\Delta t}\}_k$ and $\log\{\frac{\Delta(\text{amount of congestion aware packets }120)}{\Delta t}\}_k$ are determined. One such measurement puts a restriction on the possible value of the compliance parameters $\alpha$ and $\beta$, respectively labelled 70 and 71. This restriction is a straight line in a log-log plot, as visible Fig. 4A. Such measurements determine the pair $(\alpha,\beta)$ that describes the best the response of the macro-flow 100 to congestion as an intersection of the restrictions, as visible in reference 72 of Fig. 4A. Such procedure is known as the Hough transform.

Fig. 4B schematically illustrates that based on the pair $(\alpha,\beta)$, respectively labelled 77 and 76, that describe each macro-flow 100, compliant macro-flows 100 can be separated from non-compliant macro-flows 100. The boundary, which separates a no-go zone from a go zone in reference 78 and which is here depicted as a straight line for illustrative purposes only, can be determined from past examples of responses of macro-flows 100 to congestion via clustering techniques and from prior art knowledge, for example if $\alpha$ is close to 0, $\beta$ cannot be large. Macro-flows 100 for which the pair $(\alpha,\beta)$ is lower than the boundary 78 are identified as compliant, and macro-flows for which the pair $(\alpha,\beta)$ is higher than the boundary 78 are identified as non-compliant. Therefore, on Fig. 4B, the macro-flow 1 100 labelled 73 and the macro-flow 2 100 labelled 74 are identified as compliant. But the macro-flow 3 100 labelled 75 is identified as non-compliant as its pair $(\alpha,\beta)$ is lower than the boundary labelled 78.

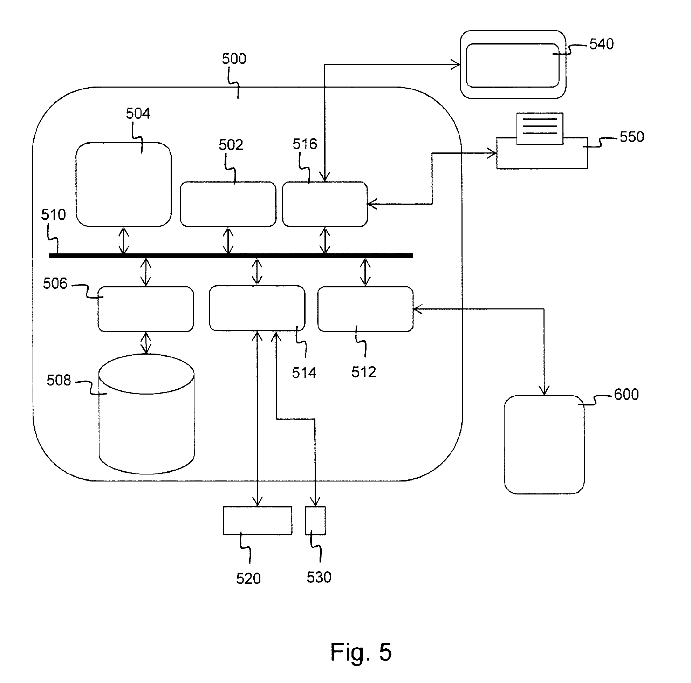

Fig. 5 shows a suitable computing system 500 for hosting the network node 1 of Fig. 1. Computing system 500 may in general be formed as a suitable general purpose computer and comprise a bus 510, a processor 502, a local memory 504, one or more optional input interfaces 514, one or more optional output interfaces 516 a communication interface 512, a storage element interface 506 and one or more storage elements 508. Bus 510 may comprise one or more conductors that permit communication among the components of the computing system. Processor 502 may include any type of conventional processor or microprocessor that interprets and executes programming instructions. Local memory 504 may include a random access memory (RAM) or another type of dynamic storage device that stores information and instructions for execution by processor 502 and/or a read only memory (ROM) or another type of static storage device that stores static information and instructions for use by processor 504. Input interface 514 may comprise one or more conventional mechanisms that permit an operator to input information to the computing system 500, such as a keyboard 520, a mouse 530, a pen, voice recognition and/or biometric mechanisms, etc. Output interface 516 may comprise one or more conventional mechanisms that output information to the operator, such as a display 540, a printer 550, a speaker, etc. Communication interface 512 may comprise any transceiver-like mechanism such as for example two 1 Gb Ethernet interfaces that enables computing system 500 to communicate with other devices and/or systems, for example mechanisms for communicating with one or more other computing systems 600. The communication interface 512 of computing system 500 may be connected to such another computing system by means of a local area network (LAN) or a wide area network (WAN, such as for example the internet, in which case the other computing system 500 may for example comprise a suitable web server. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example 1TB SATA disk drives, and control the reading and writing of data to and/or from these storage elements 508. Although the storage elements 508 above is described as a local disk, in general any other suitable computer-readable media such as a removable magnetic disk, optical storage media such as a CD or DVD, -ROM disk, solid state drives, flash memory cards, ... could be used. The system 500 described above can also run as a Virtual Machine above the physical hardware.

The network node 1 of Fig. 1 can be implemented as programming instructions stored in local memory 504 of the computing system 500 for execution by its processor 502. Alternatively network node 1 of Fig. 1 could be stored on the storage element 508 or be accessible from another computing system 600 through the communication interface 512.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be

**EP 3 113 428 A1**

understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. A network node (1) able to check compliance of macro-flows (100), said network node (1) comprising:

   - an output interface (10), adapted to:

     - count an amount of packets (110) of a macro-flow (100) handled by said network node (1);
     - count an amount of congestion-aware packets (120) of said macro-flow (100) handled by said network node (1);

   - a congestion response measuring engine (20), adapted to measure from said amount of packets (110) and said amount of congestion-aware packets (120) a response (2) of said macro-flow (100) to congestion as indicated by said congestion-aware packets (120); and
   - a compliance discriminating unit (30), configured to:

     - compare said response (2) with a compliance threshold (3); and
     - identify said macro-flow (100) as non-compliant when said response (2) is lower than said compliance threshold (3).

2. A network node (1) according to claim 1, wherein said compliance discriminating unit (30) is further adapted to:

   - cluster responses (2) of a plurality of macro-flows (100) to congestion, thereby generating a cluster of responses (2);
   - determine said compliance threshold (3) from said cluster of responses (2).

3. A network node (1) according to claim 1, wherein said network node (1) further comprises:

   - a predetermined response template database (40), adapted to store predetermined response templates (4) of said macro-flow (100) to congestion;

   and wherein said congestion response measuring engine (20) is operationally coupled to said predetermined response template database (40) and is further adapted to:

     - select from said amount of packets (110) and said amount of congestion-aware packets (120) one of said predetermined response templates (4) for said macro-flow (100); and
     - apply said one of said predetermined response templates (4).

4. A network node (1) according to claim 1, wherein said congestion-aware packets (120) correspond to:

   - delayed packets;
   - early congestion notification packets; or
   - dropped packets.

5. A network node (1) according to claim 1, wherein said output interface (10) is further adapted to:

   - count a subset amount of packets (130) of a macro-flow (100) handled by said network node (1); and

- count a congestion-aware subset amount of congestion-aware packets (140) of said macro-flow (100) handled by said network node (1).

6. A method for checking compliance of macro-flows (100), said method comprising the steps of:

- counting an amount of packets (110) of a macro-flow (100) handled by a network node (1);
- counting an amount of congestion-aware packets (120) of said macro-flow (100) handled by said network node (1);
- measuring from said amount of packets (110) and said amount of congestion-aware packets (120) a response (2) of said macro-flow (100) to congestion as indicated by said congestion-aware packets (120);
- comparing said response (2) with a compliance threshold (3);
- identifying said macro-flow (100) as non-compliant when said response (2) is lower than said compliance threshold (3).

7. A computer program comprising software code adapted to perform the method according to claim 6.

8. A computer readable storage medium comprising computer-executable instructions which, when executed by a computing system, perform a method according to claim 6.

Fig. 1

Counting amount
of packets 110
of macro-flow 100
50

Counting amount
of congestion-aware
packets 120
of macro-flow 100
51

Measuring
response 2
to congestion
52

Comparing
response 2 to
compliance threshold 3
53

Is response 2
lower than compliance
threshold 3?
54

Yes

No

Identifying
macro-flow 100
as non-compliant
55

Identifying
macro-flow 100
as compliant
56

Fig. 2

Counting amount
of packets 110
of macro-flows 100
60

Counting amount
of congestion-aware
packets 120
of macro-flows 100
61

Measuring
responses 2
to congestion
62

Clustering responses 2
63

Determining compliance
threshold 3 from
cluster of responses 2
64

Fig. 3

72 (α,β) associated with macro-flow 100

71 α

β

70

4

**Fig. 4A**

73 ← Macro-flow 1

74 ← Macro-flow 2

77 α

78 No-go zone

76 β

75 Macro-flow 3 →

4

**Fig. 4B**

Fig. 5

Europäisches
Patentamt
European
Patent Office
Office européen
des brevets

# EUROPEAN SEARCH REPORT

**Application Number**

EP 15 29 0168

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/124754 A1 (KUTSCHER DIRK [DE] ET AL) 16 May 2013 (2013-05-16) * abstract * * paragraph [0001] - paragraph [0025] * * paragraph [0036] - paragraph [0038] * * paragraph [0046] - paragraph [0054] * * paragraph [0056] - paragraph [0058] * * paragraph [0061] - paragraph [0064] * * paragraph [0067] - paragraph [0071] * * claims 1-3, 11-13 * * figures 1, 5-9 * | 1-8 | INV. H04L12/851 H04L12/801 |
| A | EP 2 779 542 A2 (ARISTA NETWORKS INC [US]) 17 September 2014 (2014-09-17) * abstract * * paragraph [0002] - paragraph [0007] * | 1-8 | |
| A | EP 1 441 288 A2 (MICROSOFT CORP [US]) 28 July 2004 (2004-07-28) * abstract * * paragraph [0001] - paragraph [0013] * * claims 1, 5 * | 1-8 | |

**TECHNICAL FIELDS SEARCHED (IPC)**

H04L

The present search report has been drawn up for all claims

| Place of search | Date of completion of the search | Examiner |
|---|---|---|
| Munich | 4 November 2015 | Schrembs, Gerd |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 29 0168

This annex lists the patent family members relating to the patent documents cited in the above-mentioned European search report.
The members are as contained in the European Patent Office EDP file on
The European Patent Office is in no way liable for these particulars which are merely given for the purpose of information.

04-11-2015

| Patent document cited in search report | | Publication date | Patent family member(s) | | Publication date |
|---|---|---|---|---|---|
| US 2013124754 | A1 | 16-05-2013 | EP<br>JP<br>JP<br>US<br>WO | 2614619 A1<br>5606629 B2<br>2013539284 A<br>2013124754 A1<br>2012031746 A1 | 17-07-2013<br>15-10-2014<br>17-10-2013<br>16-05-2013<br>15-03-2012 |
| EP 2779542 | A2 | 17-09-2014 | EP<br>US | 2779542 A2<br>2014269378 A1 | 17-09-2014<br>18-09-2014 |
| EP 1441288 | A2 | 28-07-2004 | AT<br>BR<br>CN<br>EP<br>JP<br>JP<br>KR<br>US | 428140 T<br>PI0400085 A<br>1518283 A<br>1441288 A2<br>4448341 B2<br>2004236316 A<br>20040068880 A<br>2004148423 A1 | 15-04-2009<br>14-09-2004<br>04-08-2004<br>28-07-2004<br>07-04-2010<br>19-08-2004<br>02-08-2004<br>29-07-2004 |

EPO FORM P0459

For more details about this annex : see Official Journal of the European Patent Office, No. 12/82

**EP 3 113 428 A1**

**Non-patent literature cited in the description**

- **DEVANGBHAI GOVINDBHAI CHAVDA et al.** Performance Evaluation of TCP in the Presence of UDP in Heterogeneous Networks by using Network Simulator 2. *the International Journal for Scientific Research and Development,* 01 June 2014, vol. 2 (3

- **STEVEN LATRÉ et al.** A Cognitive Accountability Mechanism for Penalising Misbehaving ECN-based TCP stacks. *the International Journal of Network Management,* 01 April 2012, vol. 23 (1), 16-40